# EUROPÄISCHE PATENTSCHRIFT

(11) **EP 0 833 065 B1**
(45) Veröffentlichungstag und Bekanntmachung des Hinweises auf die Patenterteilung: **15.03.2000**
(21) Anmeldenummer: 97111292.5
(22) Anmeldetag: 04.07.1997
(51) Int. Cl.: F16B 13/14

(54) **Verbunddübel**
Compound plug
Cheville composite

(30) Priorität: 26.09.1996 DE 19639604
(43) Veröffentlichungstag der Anmeldung: 01.04.1998
(73) Patentinhaber: fischerwerke Artur Fischer GmbH & Co. KG, 72178 Waldachtal (DE)
(72) Erfinder: Fischer, Artur, Prof. Dr. h.c. Dr.-Ing. E.h., 72178 Waldachtal (DE)

(56) Entgegenhaltungen:
- DE-A- 2 702 591
- DE-A- 3 800 833

## Beschreibung

Die Erfindung betrifft einen mit einem Gewebestrumpf überzogenen Verbunddübel aus Kunststoff gemäß der Gattung des Anspruches 1.

Die Befestigung eines Befestigungselementes mittels Verbundmörtel oder dergleichen ist insbesondere in porösem oder brüchigem Mauerwerk oftmals erforderlich, um auch hier hohe Haltekräfte zu erzielen. Ein solches Befestigungselement, das durch Einspritzen eines Verbundmörtels oder eines entsprechenden Verbundmittels fest im Mauerwerk verankerbar ist, ist aus der DE 27 02 591 A1 bekannt. Der Verbunddübel ist mit einem Schraubkanal zur Aufnahme einer Befestigungsschraube und an seiner Außenfläche mit Sperrmitteln versehen. Ferner weist der Verbunddübel einen Schaft mit Austrittsöffnungen für in den Dübel einspritzbaren Verbundmörtel auf, wobei im Schraubenkanal zu den Austrittsöffnungen führende, den vorderen Teil des Schraubenkanals verschließende Leitflächen angeordnet sind. Diese Leitflächen leiten den einzuspritzenden Verbundmörtel auf von den Austrittsöffnungen bis zum vorderen Stirnende des Verbunddübels sich erstreckende Längsrinnen.

Mit diesem Verbunddübel wird eine Verankerung in porösem Mauerwerk bezweckt. Durch Einspritzen eines hochfesten Verbundmörtels ist der Dübel nach dem Aushärten des Mörtels in den Mörtelkern formschlüssig eingebunden. Eine Belastung des Dübels ist allerdings erst dann möglich, wenn der Verbundmörtel vollständig ausgehärtet ist. Dies kann in Abhängigkeit von der Art des Mörtels mehrere Stunden, unter Umständen gar Tage dauern. Daraus resultiert ein Montageablauf, bei dem zunächst der Verbunddübel verankert und zu einem späteren Zeitpunkt der Gegenstand befestigt wird.

Um eine sofortige Montage des befestigenden Gegenstandes zu ermöglichen und gleichzeitig die hohen Haltewerte eines Verbunddübels in porösem Material zu erhalten, wurde in der DE 38 00 833 A1 ein mit einem Gewebestrumpf überzogener Verbunddübel aus Kunststoff vorgeschlagen, der an seiner Außenfläche Sperrmittel aufweist. Im Schraubenkanal des bekannten Verbunddübels sind zu den Austrittsöffnungen führende, den vorderen Teil des Schraubenkanals verschließende Leitflächen angeordnet, die den einzuspritzenden Verbundmörtel auf von den Austrittsöffnungen bis zum vorderen Stirnende des Verbünddübels sich erstreckende Längsrinnen leitet. Durch diese Leitflächen wird der Schraubenkanal von Verbundmörtel freigehalten. Dies setzt allerdings voraus, daß sowohl die Austrittsöffnungen als auch die Leitflächen am hinteren Ende des Dübels und damit am Anfang des Schraubenkanals angeordnet sind. Zum Eindrehen der Schraube nach dem Ausspritzen des Verbunddübels müssen die den Schraubenkanal verschließenden Leitflächen mit der Schraube durchstoßen werden. Da dies unter Umständen zu einer Beschädigung des Dübels und der Befestigung führen kann, wurde auch vorgeschlagen, die Leitflächen an einem zusätzlichen Teil anzubringen, das nach dem Ausspritzen des Dübels entfernt wird. Abgesehen von dem höheren Herstellungsaufwand für das zusätzliche Teil ist bei diesem bekannten Verbunddübel auch der Mörtelverbrauch höher, da der in diesem Teil sich befindende Verbundmörtel nach dem Spritzvorgang ebenfalls weggeworfen wird.

Der Erfindung liegt die Aufgabe zugrunde, einen Verbunddübel zu schaffen, der eine sofortige Montage des zu befestigenden Gegenstandes zuläßt und gleichzeitig die hohen Haltewerte eines Verbunddübels in porösem Material ermöglicht bei kostengünstiger Fertigung und einfacher, mörtelsparender Montage des Verbunddübels.

Die Lösung dieser Aufgabe wird durch die im Anspruch 1 angegebenen Merkmale erreicht. Durch die Anpassung und Abstimmung wenigstens eines Teils des Schraubenkanals an die sich konisch zuspitzende Form der Düse der Spritzvorrichtung wird zwischen der Düse und dem Schraubenkanal eine Abdichtung erreicht, die dafür sorgt, daß der bis zu den Austrittsöffnungen reichende Teil des Schraubenkanals von Verbundmörtel freibleibt. Um auch bei größeren Toleranzabweichungen zwischen dem Außenmaß der Düse und dem Innenmaß des Schraubenkanals des Verbunddübels stets eine gleiche Einschiebtiefe zu erreichen, ist im Schraubenkanal im Bereich der Austrittsöffnungen ein Anschlag angeordnet, an dem die Stirnseite der Düse zu ihrer Einschiebbegrenzung anstößt. Der Anschlag wird vorzugsweise durch die Schulterfläche eines zylindrischen Abschnittes gebildet, dessen Durchmesser etwas kleiner ist als der Durchmesser des Schraubenkanals. Mit der Ringfläche ergibt sich eine zusätzliche Abdichtung zwischen der Düse der Spritzvorrichtung und dem Schraubenkanal des Verbunddübels.

Der über die Düse eingespritzte Mörtel füllt zunächst den durch eine Spritzhaut abgeschlossenen Raum des zylindrischen Abschnittes und fließt dann durch die Austrittsöffnungen in die an der Außenfläche des Dübels angeordneten Längsrillen. Bei entsprechendem Spritzdruck wird der über den Verbunddübel gestülpte Gewebestrumpf in die Hohlräume beispielsweise eines Hohllochziegels ausgebeult. Nach dem Ausspritzen und Entfernen der Spritzvorrichtung ist der Schraubenkanal bis zu den Austrittsöffnungen frei von Verbundmörtel, sodaß eine Befestigungsschraube in den konisch sich verjüngenden Schraubenkanal eingedreht werden kann. Geringfügige, durch die Austrittsöffnungen zurückgedrückte Mörtelmenge wird beim Eindrehen der Befestigungsschraube verdrängt. Durch die Verengung des Schraubenkanals einerseits und den aufreißbaren vorzugsweise sich gegenüberliegenden Längsrillen andererseits kann der Dübel gespreizt und im Bohrloch verankert werden. Der Haltewert nach dem Verspreizen des Dübels reicht aus, das Gewicht des zu befestigenden Gegenstandes zu halten. Damit ist es möglich, die Montage vollständig durchzuführen. Nach dem Aushärten des Mörtels wird dann der Haltewert des Verbunddübels soweit gesteigert, daß die Zusatzbelastungen durch Nutzung des befestigten Gegenstandes gegebenenfalls auch Auftreten von Überlastungen aufgenommen werden können.

Die Austrittsöffnungen befinden sich im vorderen Bereich und so nah wie möglich am Stirnende des Dübels. Da an dieser Stelle die Rückstellkraft des Gewebestrumpfes am geringsten ist, tritt nur ein geringer Rückfluß von Verbundmaterial nach dem Herausziehen der Düse auf.

Die Bildung des Anschlags als Einschiebbegrenzung für die Düse kann in einer Ausgestaltung der Erfindung dadurch erfolgen, daß sich an den konisch sich verjüngenden Abschnitt des Schraubenkanals zum vorderen Ende hin ein zylindrischer Abschnitt mit einem geringeren Durchmesser anschließt. Zweckmäßigerweise erstreckt sich der zylindrische Abschnitt zum hinteren Ende des Dübels hin über die Austrittsöffnungen hinaus. Damit wird sichergestellt, daß die Austrittsöffnungen von der Düse nicht abgedeckt werden.

Für die Verwendung des Verbunddübels in sehr porösen Baustoffen ist es zweckmäßig, den Verbunddübel mit einem eine Einschlitzung aufweisenden erweiterten Halsabschnitt zu versehen. Beim Einsetzen des Verbunddübels in das Bohrloch wird der Halsabschnitt zusammengedrückt und dabei der Schraubenkanal im Bereich des Halsabschnittes verengt. Beim Eindrehen der Schraube ergibt sich somit ein Spreizeffekt, der die Drehsicherung des Verbunddübels beim weiteren Eindrehen der Befestigungsschraube in den sich verengenden Schraubenkanal bewirkt. Die Drehsicherungswirkung insbesondere in sehr porösem Mauerwerk kann durch einen polygonen Querschnitt des Halsabschnittes noch erhöht werden. Der Verbunddübel besitzt in der bevorzugten Ausführungsform ein den Dübelschaft umschließendes Gewebe, welches dehnbar und engmaschig ausgebildet ist. Beim Einspritzen des Verbundmörtels weicht das Gewebe nach außen aus, wobei aufgrund der engen Maschen der Verbundmörtel zwischen Gewebe und Dübelschaft gehalten wird. Ist der Dübel in einem Wabenstein oder in einer Bohrung mit seitlichen Ausbuchtungen eingesetzt, so bildet das Gewebe zusammen mit dem eingespritzten Verbundmörtel entsprechende Ausbuchtungen aus, die nach dem Aushärten eine formschlüssige Verbindung zwischen Verbunddübel und Mauerwerk herstellen.

Die Erfindung wird nachfolgend anhand der Zeichnung näher erläutert.

Es zeigen:

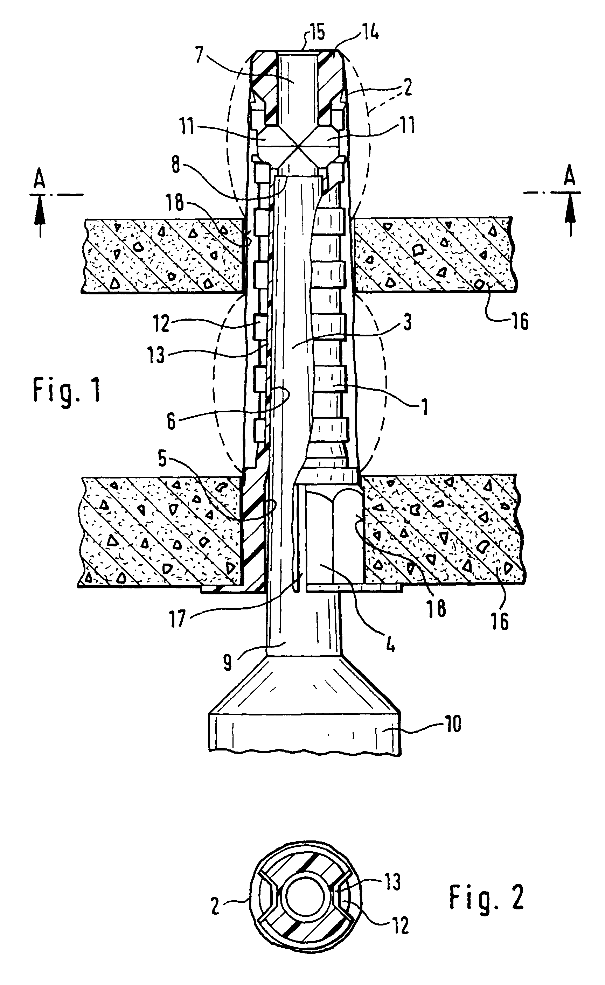

- Figur 1: einen in einen Wabenstein eingesetzten Verbunddübel mit Spritzvorrichtung
- Figur 2: einen Querschnitt des Verbunddübels nach Figur 1 gemäß der Schnittlinie A-A

Der Verbunddübel besteht aus einem Dübelschaft 1 und einem ihn umschließenden Gewebestrumpf 2. Der im Dübelschaft 1 verlaufende Schraubenkanal 3 weist im Halsbereich 4 des Dübels einen zylindrischen Abschnitt 5 auf, an den sich ein konisch sich verjüngender Abschnitt 6 anschließt. Dieser konisch sich verjüngende Abschnitt setzt sich mit einem zylindrischen Abschnitt 7 fort, der einen geringeren Durchmesser als der vorhergehende Abschnitt aufweist. Dadurch entsteht eine Schulterfläche 8, die als Anschlag zur Einschiebbegrenzung für die Düse 9 der Spritzvorrichtung 10 dient. Damit wird verhindert, daß die Düse 9 zuweit in den Schraubenkanal 3 eindringt und dabei die Austrittsöffnungen 11 abdeckt.

Die beiden sich gegenüberliegenden Austrittsöffnungen 11 münden in im Querschnitt trapezförmige Längsrillen 12, die sich über einen Teil der Länge des Dübels erstrecken. Der Rillengrund 13 wird durch eine Spritzhaut gebildet, die beim Eindrehen einer Befestigungsschraube (nicht dargestellt) in den konisch sich verjüngenden Abschnitt 6 des Schraubenkanals 3 aufreißt und damit eine Aufspreizung des Verbunddübels zuläßt.

Der Verschluß des Schraubenkanals 3 am vorderen Ende 14 des Verbunddübels wird ebenfalls durch eine Spritzhaut 15 gebildet, die beim Eindrehen der Befesigungsschraube durchstoßen wird. Beim Einspritzen des Verbundmörtels füllt sich der Abschnitt 7 des Schraubenkanals soweit auf, daß durch den Rückstau ein Austritt des Verbundmörtels durch die Öffnungen 11 erfolgt. Durch den Spritzdruck wölbt sich der Gewebestrumpf 2 nach außen (gestrichelt dargestellt), und bildet in den Hohlräumen des Wabensteines 16 Ausbuchtungen. Durch diese Ausbuchtungen ergibt sich nach dem Aushärten eine formschlüssige Verbindung zwischen Verbunddübel und dem Mauerwerk.

Beim Einschieben des Verbunddübels in das Bohrloch 18 im Wabenstein 16 wird der mit einer Einschlitzung 17 versehende erweiterte Halsabschnitt 4 auf den Durchmesser des Bohrloches 18 zusammengedrückt. Dabei verengt sich auch der Abschnitt 5 des Schraubenkanals 3, sodaß beim Eindrehen einer Befestigungsschraube eine Verpressung des Halsabschnittes 4 in dem Bohrloch 18 des Wabensteines 16 erfolgt. Diese Verpressung wirkt als Drehsicherung um ein Mitdrehen beim weiteren Eindrehen der Befestigungsschraube in den sich verengenden Schraubenkanal 6 zu verhindern. Durch einen polygonen Querschnitt des Halsabschnittes 4 ergeben sich Längskanten, die sich in das Material eingraben und die Wirkung der Drehsicherung noch verbessern.

## Patentansprüche

1. Mit einem Gewebestrumpf überzogener Verbunddübel aus Kunststoff mit an seiner Außenfläche angeordneten Sperrmitteln und einem Schraubenkanal zur Aufnahme einer Befestigungsschraube, sowie einem Schaft mit Austrittsöffnungen für in den Verbunddübel mittels einer eine Düse aufweisenden Spritzvorrichtung einspritzbaren Verbundmörtel, wobei die Austrittsöffnungen in aufreißbare, sich an der Außenfläche des Dübels in Längsrichtung erstreckende Längsrillen münden, **dadurch gekennzeichnet**, daß der Schraubenkanal (3) wenigstens über einen Teil seiner Länge in Anpassung an die Düse (9) der Spritzvorrichtung (10) konisch verjüngt ausgebildet und am einführseitigen vorderen Ende (14) des Dübels durch eine Spritzhaut (15) verschlossen ist, und daß im Schraubenkanal (3) ein als Einschiebbegrenzung für die Düse dienender Anschlag (8) angeordnet ist.

2. Verbunddübel nach Anspruch 1, **dadurch gekennzeichnet**, daß die Austrittsöffnungen (11) im vorderen Bereich des Dübels und am Ende des konisch sich verjüngenden Abschnitts (6) des Schraubenkanals (3) angeordnet sind.

3. Verbunddübel nach Anspruch 1, **dadurch gekennzeichnet**, daß sich an den konisch sich verjüngenden Abschnitt (6) des Schraubenkanals (3) zum vorderen Ende (14) hin unter Bildung des Anschlags (8) ein zylindrischer Abschnitt (7) mit einem geringeren Durchmesser anschließt.

4. Verbunddübel nach Anspruch 3, **dadurch gekennzeichnet,** daß der zylindrische Abschnitt (7) sich zum hinteren Ende des Dübels hin über die Austrittsöffnungen (11) hinaus erstreckt.

5. Verbunddübel nach Anspruch 1, **dadurch gekennzeichnet,** daß der Verbunddübel einen mit einer Einschlitzung (17) versehenen und beim Einschieben in das Bohrloch zusammendrückbaren erweiterten Halsabschnitt (4) aufweist, der beim Eindrehen der Befestigungsschraube in den Abschnitt (5) des Schraubenkanals (3) aufgespreizt wird.

6. Verbunddübel nach Anspruch 5, **dadurch gekennzeichnet,** daß der Halsabschnitt (4) einen polygonen Querschnitt aufweist.

7. Verbunddübel nach Anspruch 1, **dadurch gekennzeichnet,** daß der Dübelschaft (1) von einem dehnbaren, engmaschigen Gewebestrumpf (2) überzogen ist, der an seinen beiden Enden fest mit dem Verbunddübel verbunden ist.

## Claims

1. A composite plug of plastics material over which is drawn a fabric sleeve, the plug having retaining means arranged on its outer surface and a screw channel for receiving a fixing screw, and a shank with outlet openings for composite mortar injectable into the composite plug by means of an injection device having a nozzle, the outlet openings opening into tear-open longitudinally extending channels on the outer surface of the plug, characterised in that the screw channel (3) is, at least over part of its length, of conically tapering construction conforming to the nozzle (9) of the injection device (10), and at the insertion-side front end (14) of the plug is closed by an injection-moulded web (15), and in that a stop (8) acting as means limiting the insertion of the nozzle is arranged in the screw channel (3).

2. A composite plug according to claim 1, characterised in that the outlet openings (11) are arranged in the front region of the plug and at the end of the conically tapering portion (6) of the screw channel (3).

3. A composite plug according to claim 1, characterised in that adjoining the conically tapering portion (6) of the screw channel (3) towards the front end (14) and forming the stop (8) is a cylindrical portion (7) of smaller diameter.

4. A composite plug according to claim 3, characterised in that the cylindrical portion (7) extends beyond the outlet openings (11) towards the rear end of the plug.

5. A composite plug according to claim 1, characterised in that the composite plug has a widened neck portion (4) which is provided with a slit (17) and is compressible on insertion into the drill hole, the neck portion being expanded as the fixing screw is screwed into the portion (5) of the screw channel (3).

6. A composite plug according to claim 5, characterised in that the neck portion (4) has a polygonal cross-section.

7. A composite plug according to claim 1, characterised in that the plug shank (1) has a stretchable close-meshed fabric sleeve (2) drawn thereover, which is fixedly connected at both ends to the composite plug.

## Revendications

1. Cheville composite en plastique, revêtue d'un manchon tissé et comportant des moyens de verrouillage disposés à sa surface extérieure et un canal pour vis pour recevoir une vis de fixation ainsi qu'un fût avec des ouvertures de sortie pour un mortier de liaison injectable dans la cheville composite au moyen d'un dispositif d'injection présentant une buse, dans le cas de laquelle les ouvertures de sortie débouchent dans des rainures longitudinales qui peuvent s'ouvrir et s'étendent selon la direction longitudinale sur la surface extérieure de la cheville, caractérisée par le fait que le canal pour vis (3) est conçu allant en diminuant en cône au moins sur une partie de sa longueur, en s'adaptant à la buse (9) du dispositif d'injection (10), et qu'à l'extrémité avant (14), située du côté introduction, de la cheville, il est obturé par une peau d'injection (15), et que dans le canal pour vis (3) est disposée une butée (8) qui sert à limiter l'introduction de la buse.

2. Cheville composite selon la revendication 1, caractérisée par le fait que les ouvertures de sortie (11) sont disposées dans la zone avant de la cheville et à l'extrémité du tronçon (6), qui va en diminuant en cône, du canal pour vis (3).

3. Cheville composite selon la revendication 1, caractérisée par le fait qu'au tronçon (6), qui va en diminuant en cône, du canal pour vis (3), à l'extrémité avant (14), se raccorde, en formant la butée (8), un tronçon cylindrique (7) de plus petit diamètre.

4. Cheville composite selon la revendication 3, caractérisée par le fait que le tronçon cylindrique (7) s'étend jusqu'à l'extrémité arrière de la cheville, au-delà des ouvertures de sortie (11).

5. Cheville composite selon la revendication 1, caractérisée par le fait que la cheville composite présente un tronçon élargi formant col (4) qui est muni d'une fente (17), peut se comprimer lors de l'introduction dans le trou perforé et s'expanse lorsque l'on visse la vis de fixation dans le tronçon (5) du canal pour vis (3).

6. Cheville composite selon la revendication 5, caractérisée par le fait que le tronçon formant col (4) présente une section polygonale.

7. Cheville composite selon la revendication 1, caractérisée par le fait que le fût (1) de la cheville est revêtu d'un manchon tissé (2), dilatable, à maille serrée, qui est solidement relié, à ses deux extrémités, à la cheville composite.
